# EUROPEAN PATENT APPLICATION

(11) **EP 3 437 987 A1**
(43) Date of publication of application: **06.02.2019**
(21) Application number: 18187295.3
(22) Date of filing: 03.08.2018
(51) Int. Cl.: B63J 3/00, B63H 21/20, B63J 2/12

(54) **LOW-EMISSION SHIP AND RELATIVE OPERATION METHOD**

(30) Priority: 04.08.2017 IT 201700090479
(71) Applicant: Grimaldi Euromed S.p.A., 90139 Palermo (IT)
(72) Inventor: BOCCHETTI, Dario, 80127 Napoli (IT); D'AMBRA, Andrea, 80077 Ischia (NA) (IT); BENDER MADSEN, BRIAN, 5300 Kerteminde (DK)
(74) Representative: De Gregori, Antonella

(57) **Abstract**

The present invention refers to an operation method of a low-emission ship and to a low-emission ship, wherein, in moored ship condition the electrical loads of the utilities of the ship are served by electric batteries charged when the ship is underway.

## Description

The present invention relates to a naval unit (hereafter: "ship" for the sake of brevity) with low emission of polluting substances and a related operation method.

It should be immediately specified that the "low" emission to which reference is made is obtained, by the present invention, in at least one condition, underway, or, preferably, moored.

A necessary premise is that all ships worldwide, especially large ones, are characterised by high energy consumption with consequent significant fuel consumption and harmful emissions into the atmosphere. Therefore, nowadays there is a particular strong need for solutions directed at containing said emissions in at least one operating conditions (underway or moored) of the ship.

The problem can ideally be divided in two macro-areas of interest, i.e. the energy consumption when the ship is stopped in a harbour (moored) and energy consumption when underway.

The problem of energy consumption and of emission when the ship is stopped in a harbour draws particular interest because harbours are built near inhabited areas (e.g. cities), in proximity to which it is important to curtail the polluting emissions (e.g. fumes) of moored ships, in order not to exasperate air pollution levels.

A moored ship requires electricity to power its utilities (e.g. lighting, air conditioning, fans and extractors of the cargo decks, fans and extractors of engineering spaces, cooling and ship balancing pumps, galleys and others).

According to the state of the art, this electricity demand is met in two ways: by means of shipboard auxiliary (internal combustion) engines connected to electric generators or by connection to shore power via cable.

However, both these solutions are far from being optimal.

Briefly, in the first case, the auxiliary engines (which, unlike the main ones, do not provide propulsion) are marine gas oil fuelled internal combustion engines and hence they have polluting emissions of a certain level. When the ship is moored, one of the auxiliary engines is always on, to supply power to the electric utilities that do not depend on loading/unloading activities, such as conditioning systems, lighting systems, cooling pumps, ventilation of engineering spaces. During commercial operations, electrical loads are added, relating to deck ventilation, ship balancing pumps and the reefers (refrigerator containers) connected to the ship's electrical distribution system. In addition, when ship is moored the auxiliary engines often work far from the optimal design point (e.g. for redundancy and safety reasons), with an overall worsening of polluting emissions. Another drawback is tied to the frequency of the maintenance intervals necessary for these auxiliary engines.

In the second case, to power the shipboard electrical utilities, the ship is electrically connected to a shore electrical grid; while this is better than the first case in terms of polluting emissions, this solution is - today - rarely implemented due to technical limitations; very few harbours can supply electrical power, since electrical absorption is huge as multiple ships are to be supplied power simultaneously (especially when considering cruise ships with absorption up to 10MW each moored simultaneously with other cargo ships and ferries) with consequent infrastructural difficulties. Moreover, not all types of ships are powered with currents at the same frequency (50-60 Hz) with consequent design and dimensioning problems. Lastly, today's ships are mostly not designed for this option and hence it would be necessary to adapt by specific conversion actions.

From the above analysis, it is readily apparent that in the reference technical field there is a particularly strong need to power the electrical loads of the ship, moored in port, with a low polluting emission into the atmosphere.

Also in case of a ship underway: to reduce consumption (and, consequently, emissions), several solutions have been developed over time, based, in short, on recovery systems or saving systems or energy generation systems, demonstrating that the problem is particularly significant in the field.

This problem is also particularly significant in the case of cargo ships, for example "*Ro-Ro cargos*" (i.e., Roll-on roll-off); "*Ro-Ro cargo,* used to transport wheeled cargos (e.g. cars, trucks, semi-trailers and the like).

These ships have in themselves some additional critical issues, tied to the fact that wheeled cargo cannot be stowed in a compact manner as in other types of ships (e.g. containerised cargo) and this is a problem in relation to current EEDI regulations (IMO - International Maritime Organization - MARPOL - International Convention for the Prevention of Pollution from Ships- Annex VII) which prescribe limits to the weight of the cargo/speed of travel/quantity of CO₂ emitted.

Without wishing to expound at length on these regulatory aspects, it should be stressed here primarily that the issue is particularly sensitive in the case of "*Ro-Ro cargos*" because of the implicit limitations indicated above; therefore, in the specific case of "*Ro-Ro cargos*" it is necessary for the ship to be optimised with regard to energy efficiency to a degree that is difficult - if not impossible - to obtain by a relatively simple variation of design parameters (e.g. geometry, dimensions, materials) of the ship itself.

A specific task of the present invention is to provide a ship and a related operation method that solves the technical problem described above, overcomes the drawbacks and exceeds the limits of the prior art making it possible to reduce the ship's emission at least when it is moored in a harbour.

Within this task, a purpose of the present invention is to provide such a ship and a related method that can be implemented starting from existing ships, with technical adaptations or upgrades thereof.

Another purpose of the invention is to provide such a ship and a related method that are able to give the broadest assurance of reliability and safety in use.

Another purpose of the invention is to provide such a ship and a related method that are relatively simple to realise and economically competitive if compared with the prior art. Another purpose of the invention is to make available a so called "RO-Ro Cargo" that complies with the current regulations identified above.

The task described above, as well as the purposes mentioned and others that will be more readily apparent below, are achieved by a method according to the first attached claim and a ship according to the related attached independent claim.

The attached claims are an integral part of the present description.

Further features and advantages shall become more readily apparent from the description of a preferred, but not exclusive, embodiment of a ship and a method for its operation illustrated by way of non-limiting indication with the aid of the accompanying drawings, in which:
figure 1 is a schematic view of a first embodiment of part of a ship, according to the invention;
figure 2 is a schematic view of a second embodiment of part of a ship, according to the invention;

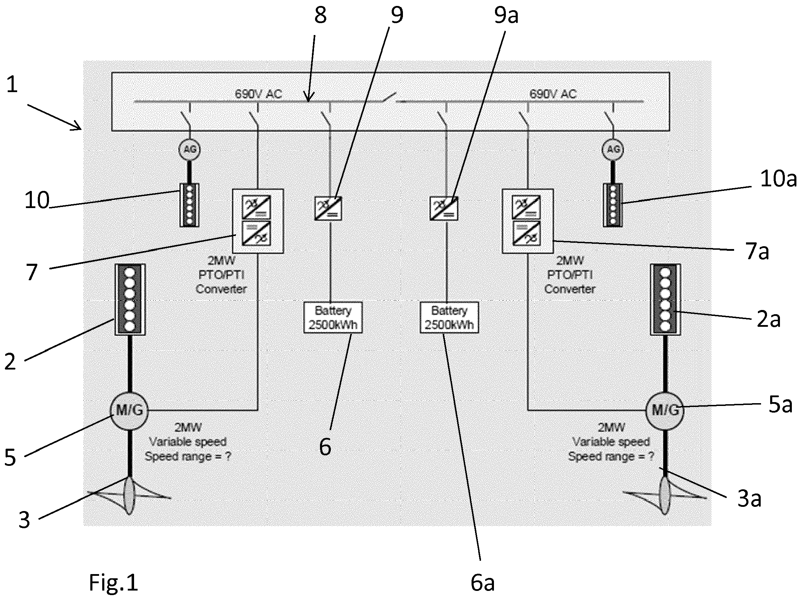

Hereafter, the method of the invention shall be described first, with reference to figure 1, illustrating an example of a ship 1 (only a part whereof is shown) which embodies the method of the invention; this example shows - not limitedly - the case in which the ship is provided with doubled circuits, for operating redundancy; the same parts of a first circuit are followed by the letter "a" in the second circuit; preferably, the two circuits are identical.

In its general outline, the low-emission operation method of a ship, comprising the steps of
- mooring the ship in a harbour,
- stopping (shutting down, in the sense of stopping their operation) the engines 2,2a, 10, 10a of the ship,
- powering electrical utilities of the ship with electricity drawn from shipboard electric batteries 6,6a.

The term "engine" herein means both the main engines 2,2a, typically internal combustion, marine gas oil propulsion engines, and the auxiliary engines 10,10a, typically internal combustion, marine gas oil and provided aboard the ships and dedicated to the generation of electricity by coupling to an electric generator.

According to the invention - and differently from the prior art - the auxiliary engines 10,10a are kept off (or stopped) when the ship is moored, thus advantageously being able to eliminate the environmental effect of the moored ship, at least in terms of fumes emitted by the combustion of the engines.

Preferably, all the electrical utilities of the ship (e.g., conditioning system, electrical loads of the cargo units - such as reefers -, pumps, fans, navigation systems, lights, controls and the like) are powered exclusively with the electricity drawn from on-board electric batteries 6,6a.

This takes place by electrically connecting the electric batteries 6,6a to the on-board electric distribution network 8 which in turn powers the electrical utilities: if the on-board network 8 is with alternating current, an inverter 9,9a is inserted between the batteries and the on-board electric distribution network, to transform direct current in alternating current (DC/AC).

To further reduce the emissions of the ship, the electric batteries are only recharged in an underway condition, by means of electric generators 5,5a connected to the propulsion engines 2,2a of the ship, leaving the recharging of the electric batteries 6,6a disabled when the ship is moored.

This provides a considerable advantage in terms of efficiency of the recharging system: the propulsion engines 2,2a of the ship are normally more efficient that any auxiliary engines 10,10a and it is therefore advantageous to use the propulsion engines for recharging the batteries 6,6a when the ship is underway.

For this purpose, the electric generators 5,5a are preferably PTO/PTI (power-take-off / power-take-in) devices, or electric generators directly coupled to the drive shaft 3,3a of the propulsion engines 2,2a upstream of the propellers 4,4a.

PTO/PTI devices are known in themselves in the prior art and hence no detailed description thereof will be provided here; it will suffice to note that PTO/PTI devices, in addition to generating electricity, can also function as engines able to deliver power to the propeller shaft, thereby contributing to the propulsion of the ship. In particular, with these PTO/PTI it is possible to enable the "*peak shaving*" functionality which allows to maintain the constant load on main engines 2,2a for propulsion and provide for peak loads through these PTO/PTI using the energy stored in the batteries 6,6a. In this way, reducing transients and allowing the main thermal engine to operate in its optimal design point, the best efficiency is obtained and both consumption and polluting emissions are reduced. When, vice versa, there is a surplus of mechanical energy, it is converted into electricity, which, according to the invention, is used to recharge the on-board batteries 6,6a.

For this purpose, as will be described better farther on, the on-board batteries 6,6a are electrically connected, directly or indirectly, with the PTO/PTI device 5,5a.

Preferably, upon mooring the ship, i.e. when the propulsion engines 2,2a are shut down or turned off, a ship energy-saving step is activated, comprising at least the steps of:
- regulating pickup and/or circulation pumps of the seawater cooling circuit for cooling the propulsion and/or auxiliary engines,
- deactivating fans for supplying air to the propulsion motor and auxiliary motors,
- reducing the energy consumption of the air conditioning system for the spaces of the ship, for example activating the conditioning system only for some of spaces of the ship and/or activating the conditioning system to emit air at higher temperature than the air emitted when underway.

Concerning the regulation of the pickup and/or circulation pumps of the seawater cooling circuit, some additional considerations should be made here: ships generally have one or two seawater pickup pumps and a seawater cooling circuit that comprises at least one heat exchanger; also provided is a different cooling circuit of thermal utilities of the ship with operates with a heat transfer fluid, preferably fresh water ("technical water", in the jargon) which, after removing heat from the on-board utilities of the ship (e.g. conditioning systems, main engines, auxiliary engines and the like) is placed in heat exchange contact with seawater in the aforesaid heat exchangers, so as to determine the cooling of the heat transfer fluid itself.

In the aforesaid energy saving step (or mode), the internal combustion engines are shut off, therefore, not generating heat, the flow rate of seawater necessary for cooling the technical water is smaller than would be necessary if the engines were operating.

Then the flow rate of seawater drawn and supplied to the heat exchangers is adjusted by adjusting the pick-up and/or circulation pumps of the seawater cooling circuit, so that the flow rate of seawater picked up and injected into the cooling circuit is approximately equal to the sufficient and necessary flow rate for cooling active utilities in moored condition.

In other words, in the energy saving step the pickup and/or circulation pump of the seawater cooling circuit are slowed, so as to pickup a lower flow rate, calibrating the pumps as a function of the residual heat to be dispersed.

Moving on now to describe in a basic embodiment the low-emission ship 1, according to the invention (and which preferably implements the method described above), refer to fig. 1 which shows a basic embodiment.

In this embodiment, the ship 1, preferably a Ro-Ro Cargo or a Ro-Pax ship (i.e. a ferry that also provides passenger service), comprises propulsion engines 2,2a provided with respective drive shafts 3,3a each connected to a propeller 4,4a and corresponding electricity generators 5,5a connected to the drive shaft 3,3a.

The ship 1 also comprises on-board electrical utilities connected to an on-board electricity distribution network 8.

The electrical utilities can for example be the ones indicated above.

It should be immediately noted that, although preferably there are at least two propulsion engines, the invention can also be embodied in the case of a single propulsion engine.

According to the invention, in its general outline, the ship comprises electric batteries 6,6a electrically connected to the generator 5,5a for their charging, said electric batteries 6,6a being configured to power the on-board electrical utilities in a condition with the propulsion engines 2,2a and auxiliary engines 10, 10a off.

Essentially and in other words, the electric batteries 6,6a are configured to power, by themselves, all the utilities of the ship for a certain time interval when the ship is moored and its engines (e.g. internal combustion) are off.

For this purpose the electric batteries 6,6a are electrically connected to the on-board distribution network 8, possibly with the interposition of the inverter 9, 9a.

The electric batteries 6,6a, differently from any electric batteries already present aboard current ships (particularly aboard Ro-Ro cargo or Ro-Pax ships) are preferably lithium-ion batteries for shipboard use; the batteries 6,6a comprise a plurality of mutually connected individual packs of electric batteries, each pack or rack having a storage capacity comprised of from 100 and 140 kWh, preferably approximately 120kWh, with a total capacity of at least 5 Mwh which the Applicant has found to be optimal for the purposes of the invention, balancing two opposite needs, i.e. on one hand that of having sufficient battery life, on the other that of containing the total weight.

Preferably, the batteries 6,6a shall necessarily be installed in a dedicated space inside the engine room of the ship.

In the example of fig. 1, the generators 5,5a are of the PTO/PTI type (described above and not further described here) and are electrically connected to the on-board distribution network 8 through low voltage bars of the ship.

The batteries 6,6a are also connected with the on-board network 8 through the same low voltage bars.

The ship further comprises:
- a seawater cooling circuit provided with at least one seawater pickup and/or circulation pump and a heat exchanger
- a circuit for cooling thermal utilities of the ship (at least the air conditioning system and internal combustion engine), wherein a heat transfer fluid circulates, preferably fresh water (so-called "technical water"),
the two said cooling circuits being thermally connected at least through a heat exchanger for cooling the heat transfer fluid by means of seawater; according to the invention, the seawater pickup and/or circulation pump is provided at least with an inverter for adjusting the number of revolutions and the variation of the flow rate. The inverter is configured to reduce the flow rate of water treated by the pump (e.g. by reducing the revolutions of the pump), according to the electrical power supply of the on-board electrical utilities obtained only by means of batteries.

Preferably, the cooling circuit of thermal utilities comprises a temperature sensor to measure the temperature of the heat transfer fluid and configured to command the inverter of the seawater pickup and/or circulation pump according to the measured temperature of the heat transfer fluid.

Similarly, the ship is provided with fans configured to supply air to the internal combustion engines, said fans being configured to be deactivated as a function of the power supply of the on-board electrical utilities obtained only by means of batteries.

According to another optional and advantageous feature, the ship comprises (at least) one loading area provided with temperature sensors, gas and/or smoke sensors (e.g. CO₂ and oxygen) and with an extraction/ventilation device of the loading area itself, dimensioned so as to assure the number of air changes prescribed by the related standard to assure air quality.

The extraction/ventilation device is configured to be activated according to the parameters measured by said temperature sensors, gas sensors and/or smoke sensors, so as to allow an energy saving, intervening according to the actual quality of air and not according to a standard dimensioning.

For this purpose, the ventilation/conditioning device comprises fans and/or extractors moved by electric motors and comprising an inverter for regulating the velocity of rotation of the electric motor.

In particular, the temperature sensors and/or gas sensors and/or smoke sensors are configured to command the inverters of said fans and/or extractors according to measured values of temperature and/or type or quality of gas and/or smoke.

Concerning instead devices of the ship, for example heat exchangers of the ship, whose electrical absorption is less than 5 kW (if present), their influence on electric consumption is small overall.

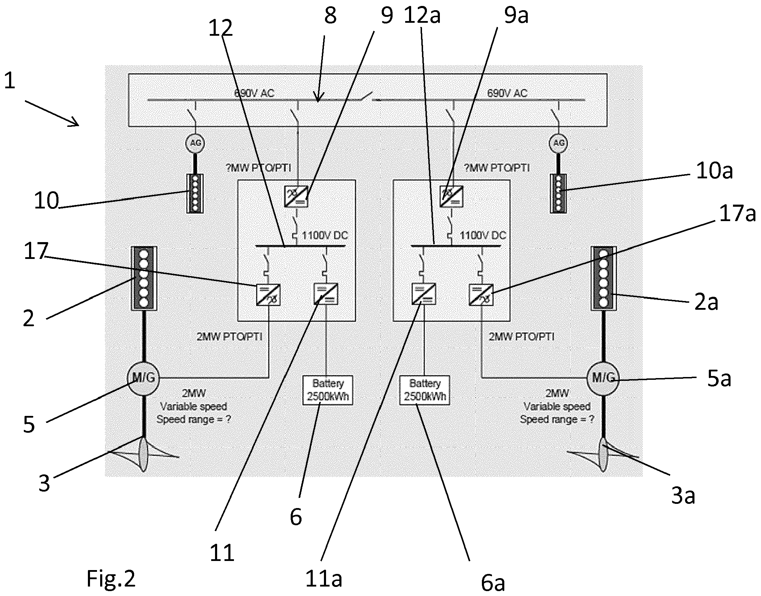

Fig. 2 schematically shows an alternative embodiment, in which the same reference numerals indicate the same parts described for fig. 1, not discussed again for the sake of brevity.

The main difference between the two embodiments is that in fig. 2 the batteries are connected to the PTO/PTI shaft generators with direct current, avoiding the double transformation DC/AC/DC and thus achieving greater efficiency. In this embodiment, the electric batteries 6,6a are electrically connected to the network 8, by the interposition of appropriate inverters 9,9a of the type described above.

The electric batteries 6,6a are recharged, when the ship is underway, thanks to the electric current which is injected into the network 12 by the generators 5,5a.

Each of the battery packs 6,6a is electrically connected to the respective network branch 12,12a with direct current and from it to the ship network and to the shaft generators by means of inverters.

The advantage of this embodiment consists of the higher efficiency due to the lower number of current transformation and hence to the lower dissipation of power.

In this embodiment, then, the recharging of the electric batteries 6,6a, which takes place when the ship is underway, provides for them to be recharged through the respective network branches 12,12a, thanks to the electric current injected by the generators 5,5a in the network branches 12,12a.

In advanced embodiments of the invention (not shown), to which the solutions of figures 1-2 described above are generally applied, additional characteristics of the ship of the invention are optionally provided.

A first optional additional characteristic of the embodiment is that the hull of the ship (preferably, but without limitation a Ro-Ro Cargo) is provided with a system for reducing friction with water, also known as "air lubrication system".

The "air lubrication" system applicable to the ship according to the invention comprises:
- one or more air compressors equipped with frequency changers
- a plurality of nozzles (air release units) for delivering compressed air connected to said compressors
- automated control system for regulating the flow of air.

The nozzles are installed on the bottom of the frame at the first line of water that corresponds to the flat bottom and allow the injection of the air on the bottom of the ship. The control system regulates compressors as a function of the draft of the ship and, through the air release units, the air is injected under the frame avoiding the turbulent regime and any cavitation on the propeller.

Additional details relating to the air lubrication system are contained in WO2003/095297, WO2010064911, WO2013/125951, PCT/NL2015/050135, PCT/NL2015/050136, PCT/NL2015050137, EP 16186405.3, EP16186407.9 whose teachings are considered incorporated by reference herein.

In short, in its essential characters, the air lubrication system applicable to the ship according to the invention reduces viscous drag by continuous injection of air under the frame at the same pressure determined by the hydrostatic head of the ship. In this way, the drag of the hull is reduced.

A second optional feature, which is provided in combination with or alternatively to the first, is the arrangement of solar panels on the ship, which are preferably used to recharge the aforesaid batteries 6,6a and/or for powering the electrical loads of the utilities when the ship is moored.

For this purpose the solar panels are electrically connected to the batteries 6,6a and/or to the distribution network 8, possibly through appropriate converters.

In practice, it has been observed that the method and the ship, according to the present invention, performs its task and achieves the set purposes because it allows using only the batteries to power the electrical loads of the electrical utilities of the ship when the ship is moored, so as to avoid using thermal engines.

Another advantage of the invention is that, when applied to a Ro-Ro Cargo or to a Ro-Pax it simplifies adaptation of the ship in view of compliance with the regulations identified above.

An additional advantage of the invention is that its retrofitting on existing ships is relatively simple.

The method and the ship thus conceived are susceptible to numerous modifications and variants, without departing from the scope of the inventive concept.

Moreover, all details can be replaced with other technically equivalent elements.

In practice, the materials used, provided they are compatible with the specific use, as well as the contingent dimensions and shapes, may be any depending on the needs.

## Claims

1. Low-emission operation method of a ship (1), comprising the steps of
- mooring the ship in a harbour,
- turning off the internal combustion engines (2,2a; 10,10a) of the ship,
- powering electrical utilities of the ship by means of electric energy taken from on-board electric batteries (6,6a).

2. Method according to claim 1, wherein all the electrical utilities of the ship are powered exclusively by means of electric energy taken from on-board electric batteries (6,6a).

3. Method according to claim 1 or 2, wherein said electric batteries (6,6a) are only charged in a sailing ship condition, by means of electric generators (5,5a) connected to the propulsion motors (2,2a) of the ship, the charging of said electric batteries (6,6a) being disabled in a moored ship condition.

4. Method according to claim 1, 2 or 3, wherein, in moored ship condition, a ship energy-saving step is activated, comprising at least the steps of:
- regulating seawater pickup and/or circulation pumps of the seawater cooling circuit
- deactivating fans for supplying air to the propulsion motor (2,2a) and auxiliary motors
- reducing the energy consumption of the air conditioning system for the rooms of the ship.

5. Low-emission ship (1), comprising:
- at least one propulsion motor (2,2a) provided with a drive shaft (3,3a) and connected to a propeller (4,4a),
- at least one electric power generator (5,5a) connected to the drive shaft (3,3a) of the propulsion motor (2,2a)
- on-board electrical utilities
**characterised in that**
the ship further comprises electric batteries (6,6a) electrically connected to said generator (5,5a) for their charging, said electric batteries (6,6a) being configured to power the on-board electrical utilities in a propulsion and auxiliary motors off condition.

6. Low-emission ship according to the preceding claim, wherein the ship comprises an on-board electric distribution network (8), said electrical batteries (6,6a) being electrically connected to said electric distribution network (8).

7. Low-emission ship according to claim 5 or 6, wherein said generators (5,5a) are electric generators directly coupled to the transmission shaft (3,3a) of the propulsion motors (2,2a) upstream of the propellers (4,4a) and comprise power-take-off/power-take-in (PTO/PTI) devices.

8. Low-emission ship according to claim 5, 6 or 7, further comprising
- a seawater cooling circuit provided with at least one seawater pickup and/or circulation pump and a heat exchanger
- a circuit for cooling thermal utilities of the ship, wherein a heat transfer fluid circulates, preferably fresh water (so-called "technical water"),
the two said cooling circuits being thermally connected at least through said heat exchanger for cooling the heat transfer fluid by means of seawater, **characterised in that** the seawater pickup and/or circulation pump is provided at least with an inverter for adjusting the number of revolutions and the variation of the flow rate, and wherein the circuit for cooling thermal utilities preferably comprises a temperature sensor for detecting the temperature of the heat transfer liquid, and the temperature sensor being configured to control the inverter of the seawater pickup and/or circulation pump as a function of the detected temperature of the heat transfer liquid.

9. Low-emission ship according to one or more of the claims from 5 to 8, further comprising fans configured to supply air to the internal combustion motors, said fans being configured to be deactivated as a function of the power supply of the on-board electrical utilities obtained only by means of batteries.

10. Low-emission ship according to one of the claims from 5 to 8, wherein the ship comprises a loading area provided with temperature sensors, gas and/or smoke sensors and an extraction/ventilation device for said loading area, said extraction/ventilation device being configured to be activated as a function of the parameters detected by said temperature sensors, gas and/or smoke CO₂ and oxygen sensors.
